# EUROPÄISCHE PATENTANMELDUNG

(11) **EP 1 623 876 A2**
(43) Veröffentlichungstag der Anmeldung: **08.02.2006**
(21) Anmeldenummer: 05110596.3
(22) Anmeldetag: 06.08.2003
(51) Int. Cl.: B60R 11/04, B60R 1/00, B60S 1/08

(54) **Kameraanordnung für Kraftfahrzeuge**

(30) Priorität: 16.08.2002 DE 10237481
(62) Teilanmeldung aus: 03102436.7
(71) Anmelder: Hella KG Hueck & Co., 59552 Lippstadt (DE)
(72) Erfinder: Hunecke, Jens, 59505, Bad Sassendorf (DE); Kaphingst, Jens, 54510, Lippetal (DE); Schulte, Michael, 33106, Paderborn (DE); Mühlenberg, Martin, 59494, Soest (DE)

(57) **Zusammenfassung**

Es wird eine Kameraanordnung für Kraftfahrzeuge mit einer Kamera (1) beschrieben, die im Fahrzeuginnenraum hinter einer Scheibe (2) angeordnet ist. Dabei ist eine Trägerplatte (3) vorgesehen, die an der Innenseite der Scheibe (2) befestigt ist und als Halterung für die Kamera (1) dient. Mit dieser Trägerplatte (3) ist mindestens ein materiegebundenes optisches Führungselement (4A,4B) für eine von der Kamera (1) unabhängige Sensoreinrichtung verbunden, wobei das optische Führungselement (4A,4B) vorzugsweise bündig mit der Trägerplatte (3) abschließt und die Trägerplatte (3) mit dem mindestens einen optischen Führungselement (4A,4B) direkt oder indirekt über ein optisches Koppelmedium an der Scheibeninnenseite anliegt.

## Beschreibung

Die Erfindung bezieht sich auf eine Kameraanordnung für Kraftfahrzeuge mit einer Kamera, die im Fahrzeuginnenraum hinter einer Scheibe angeordnet ist. Eine derartige Kameraanordnung ist beispielsweise aus der DE 40 16 570 A1 bekannt. Mit einer solchen Kameraanordnung sind verschiedenste Videoüberwachungen des Fahrzeugaußenraums oder auch eine automatisch Fahrspurerkennung möglich. Der Einsatz von Kameras in Fahrzeugen wird zukünftig zunehmen.

Ferner werden in Fahrzeugen derzeit verstärkt Regensensoren eingesetzt, die den Niederschlag auf der Windschutzscheibe erfassen und so ein automatisches Scheibenwischen ermöglichen. Ein derartiger Regensensor ist beispielsweise aus der DE 199 55 423 A1 bekannt. Bei einem solchen Regensensor wird infrarote Meßstrahlung von einem Sender über ein optisches Führungselement in die Windschutzscheibe eingekoppelt. Die so eingekoppelte Strahlung wird an der Grenzfläche der Scheibenaußenseite durch Totalreflexion reflektiert und über ein weiteres optisches Führungselement in Richtung auf einen Empfänger gerichtet. Die Totalreflexionsbedingung wird bei Anwesenheit von Niederschlag auf der Scheibe gestört, so daß der Anteil der reflektierten Strahlung und damit das Signal im Empfänger abnimmt, worauf letztendlich das Prinzip dieses Regensensors beruht. Die beiden optischen Führungselemente liegen direkt oder indirekt, z.B. über ein optisches Koppelmedium (z.B. eine Silikonschicht oder eine Klebeschicht) an der Scheibe an, wobei die Scheibe, die optischen Führungselemente und ggf. das optische Koppelmedium zumindest ähnliche Brechungsindizes für die relevante Strahlung aufweisen.

Derzeit sind die Kameraanordnung und der Regensensor völlig voneinander getrennt, was sowohl aus Kostengründen als auch konstruktiven Gründen sowie hinsichtlich des zur Verfügung stehenden Bauraums ungünstig ist.

Aufgabe der Erfindung ist die Schaffung einer Kameraanordnung unter kostengünstiger und einfacher Einbeziehung von mindestens einem optischen Führungselement für eine von der Kamera unabhängige Sensoreinrichtung.

Diese Aufgabe wird erfindungsgemäß dadurch gelöst, daß eine Trägerplatte vorgesehen ist, die an der Innenseite der Scheibe befestigt ist und als Halterung für die Kamera dient, wobei mit der Trägerplatte mindestens ein materiegebundenes optisches Führungselement für eine von der Kamera unabhängige Sensoreinrichtung verbunden ist, das vorzugsweise mit der Trägerplatte bündig abschließt. Diese Trägerplatte mit dem mindestens einen optischen Führungselement wird dann direkt oder über ein optisches Koppelmedium an der Scheibeninnenseite zur Anlage gebracht. Auf diese Weise wird eine einfach zu handhabende und kompakte Kameraanordnung geschaffen, in die ein oder mehr optische Führungselemente für eine zusätzliche Sensoreinrichtung bereits integriert sind.

Anhand der beigefügten Zeichnungen soll die Erfindung nachfolgend näher erläutert werden. Es zeigt:
- Figur 1: eine perspektivische Ansicht einer Trägerplatte für die Kamera mit darin einstückig integrierten optischen Führungselementen für einen Regensensor,
- Figur 2: eine Draufsicht auf die Trägerplatte von Figur 1,
- Figur 3: eine Draufsicht auf die Trägerplatte von Figur 1, jedoch mit Einblick in die trichterförmige Abdeckkappe,
- Figur 4: eine Seitenansicht der an der Scheibeninnenseite angeordneten Trägerplatte mit daran angeformter Abdeckkappe,
- Figur 5: eine perspektivische Ansicht einer Trägerplatte für die Kamera mit darin einstückig integrierten optischen Führungselementen für einen Regensensor, wobei die Anordnung der optischen Führungselemente gegenüber der Trägerplatte von Figur 1 verschieden ist,
- Figur 6: eine Draufsicht auf die Trägerplatte von Figur 5,
- Figur 7: eine perspektivische Ansicht einer Trägerplatte für zwei Kameras mit darin einstückig integrierten optischen Führungselementen für einen Regensensor,

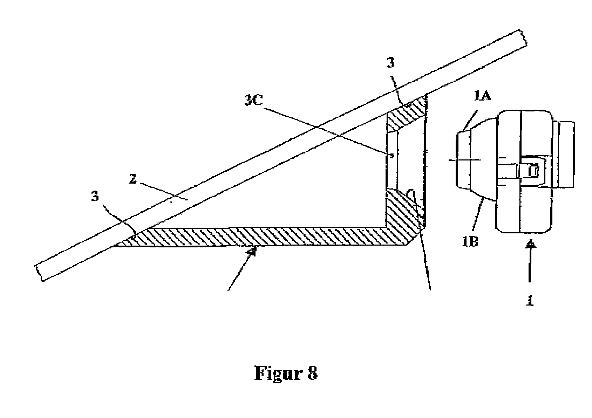

- Figur 8: die Schnittdarstellung einer Trägerplatte mit daran angeformter Abdeckkappe sowie der Kamera in Explosionsdarstellung.

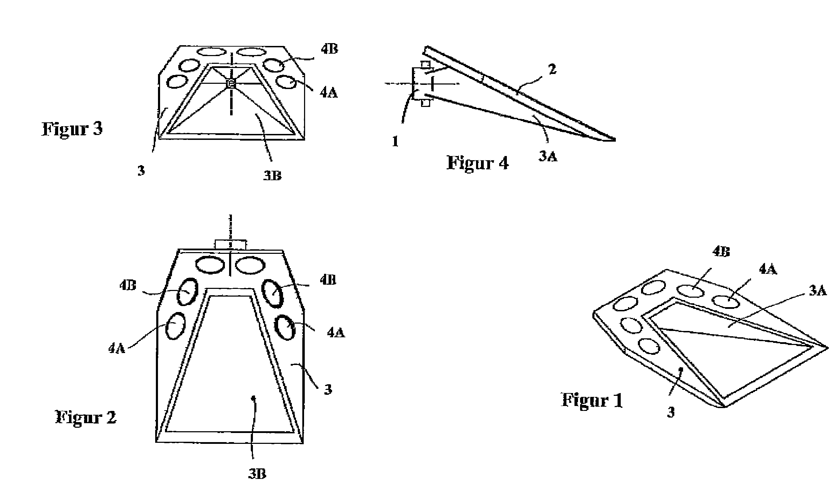

Figur 1 zeigt eine Trägerplatte (3), die als Halterung für die Kamera (1) dient und an der Innenseite der Windschutzscheibe (2) befestigt wird. Zur Halterung der Kamera bzw. des Kameragehäuses (1) ist an der Trägerplatte (3) eine vorzugsweise trichterförmige Abdeckkappe (3A) einstückig angeformt, welche den Raum zwischen Scheibe (2) und Kameraobjektiv (1A) bzw. dem Objektivtubus licht- und staubdicht umschließt. Die Kamera bzw. das Kameragehäuse (1) ist an dem der Scheibe (2) abgewandten Ende der trichterförmigen Abdeckkappe (3A) angeordnet (vgl. Figur 3, 4 und 9). Der in Richtung von der Scheibe (2) weg verjüngt ausgebildete Trichter (3A) definiert damit auch den Lichterfassungsbereich der Kamera (1). Um den Lichteintritt in die trichterförmige Abdeckkappe (3A) zu ermöglichen, weist die Trägerplatte (3) ein Lichteintrittsfenster (3B) auf, wobei die Trägerplatte (3) so an der Scheibe (2) anliegt, daß die Abdeckkappe (3A) im Bereich des Lichteintrittsfensters (3B) von der Scheibe (2) verschlossen wird. An ihrem der Scheibe (2) abgewandten Ende weist die trichterförmige Abdeckkappe (3A) eine Aussparung (3C) zur licht- und staubdichten Aufnahme des Kameraobjektivs bzw. des Objektivtubus (1A) auf

Die Verbindung zwischen der Abdeckkappe (3A) und der Kamera bzw. dem Kameragehäuse (1) erfolgt über ein Kugelgelenk. Zu diesem Zweck weist die Abdeckkappe (3A) endseitig eine einstückig mit der Abdeckkappe (3A) ausgebildete Gelenkpfanne (3D) auf, während das Kameragehäuse (1) ein entsprechendes Kugelsegment (1B) aufweist. Das Kugelgelenk dient der Justage. In der justierten Stellung werden die Gelenkpfanne (3D) und das Kugelsegment (1B) durch Laserschweißen miteinander verbunden. Dabei liegt das Kugelsegment (1B) im verschweißten Zustand staubdicht an der Gelenkpfanne (3D) an. Besonders vorteilhaft ist, daß der Mittelpunkt des Kugelgelenks auf der optischen Achse des Objektivs (1A) liegt, wodurch eine sehr kompakte Bauweise der Kameraanordnung erzielt wird. Dies wird dadurch erreicht, daß das Objektiv bzw. der Objektivtubus (1A) konzentrisch innerhalb des Kugelsegments (1B) angeordnet ist. Dementsprechend weist die Gelenkpfanne (3D) der Abdeckkappe (3) eine konzentrische lichte Aussparung (3C) für das Objektiv (1A) auf.

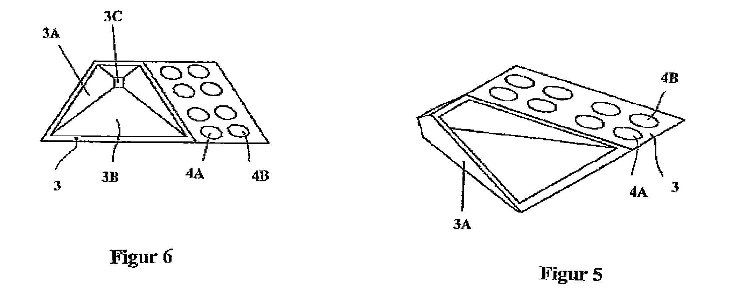

In den Ausführungsformen gemäß Figur 1,2,3, 5, 6 und 7 sind die optischen Führungselemente (4A,4B) einstückig mit der Trägerplatte (3) für die Kamera (1) ausgebildet. Die dargestellten optischen Führungselemente (4A,4B) sind Teil eines Regensensors, der der Niederschlagserfassung auf der Scheibe dient. Dabei sind drei optische FührungselementePaare vorgesehen, wobei jeweils das eine optische Führungselement (4A) einer Paarkombination der Einkopplung von Meßstrahlung aus einem Sender in die Scheibe dient, während das andere optische Führungselement (4B) der Auskopplung der an der Scheibenaußenseite reflektierten Meßstrahlung in Richtung auf einen Empfänger dient. Sender und Empfänger sind nicht dargestellt.

Erfmdungsgemäß schließen die optischen Führungselemente (4A,4B) auf der einen Seite bündig mit der Trägerplatte (3) ab, damit diese mit den optischen Führungselementen direkt oder indirekt über ein optisches Koppelmedium (nicht dargestellt) an der Scheibeninnenseite zur Anlage gebracht werden kann. Auf der der Scheibe (2) abgewandten Seite weisen die optischen Führungselemente (4A,4B) eine Krümmung (nicht dargestellt) zur Ausbildung einer Linse auf.

Die optischen Führungselemente (4A,4B) werden vorzugsweise in einem Zweikomponeten-Spritzgießverfahren einstückig mit der Trägerplatte (3) hergestellt, wobei die Trägerplatte aus einem für sichtbare Strahlung und für die Meßstrahlung undurchlässigen Kunststoffmaterial hergestellt wird, während die optischen Führungselemente aus einem für die Meßstrahlung transparenten Kunststoffmaterial hergestellt sind. Im Fall des Regensensors wird infrarotes Licht als Meßstrahlung verwendet. Die an der Trägerplatte (3), vorzugsweise im Spritzgießverfahren, angeformte Abdeckkappe (3A) besteht - wie die Trägerplatte selbstaus einem für sichtbares Licht undurchlässigen Kunststoffmaterial, so daß der Raum zwischen Scheibe (2) und Kameraobjektiv (1A) lichtdicht umschlossen wird.

In einer nicht dargestellten Ausführungsform weist die Trägerplatte mindestens ein optisches Führungselement auf, das Teil eines Vorfeld- und/oder Umgebungslichtsensors zur automatischen Fahrlichtschaltung ist, wobei das optische Führungselement das Vorfeld-und/oder Umgebungslicht auf einen zugeordneten Empfänger richtet.

In einer nicht dargestellten Ausführungsform sind die optischen Führungselemente nicht einstückig mit der Trägerplatte ausgebildet. In dieser Ausführungsform ist das mindestens eine optische Führungselement über ein Verbindungsmittel, insbesondere über eine Rastverbindung, mit der Trägerplatte für die Kamera verbunden. Zu diesem Zweck ist das mindestens eine optische Führungselement Teil einer zweiten Trägerplatte, die dann über ein Verbindungsmittel mit der Trägerplatte für die Kamera verbunden wird.

Die Befestigung der Trägerplatte (3) an der Scheibe (2) erfolgt vorzugsweise über einen Befestigungsring (nicht dargestellt), der an die Scheibe (2) geklebt ist, wobei die Trägerplatte (3) für die Kamera (1) über eine an dem Befestigungsring angreifende Feder gegen die Scheibe gedrückt wird. Dabei kann zwischen Scheibe und Trägerplatte/Führungselementen noch ein für die Meßstrahlung transparentes Koppelmedium, z.B. eine Silikonschicht, angeordnet sein. In einer alternativen Ausführungsform wird die Trägerplatte selbst an die Scheibe angeklebt.

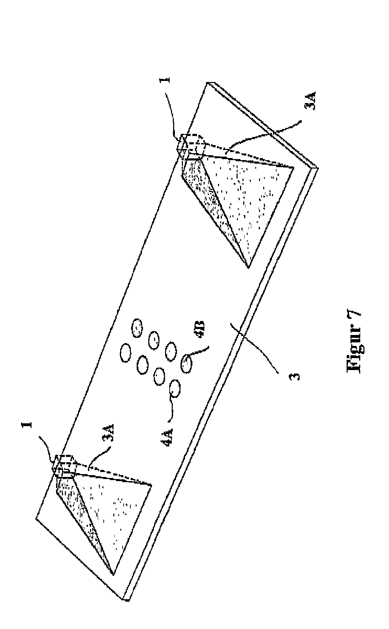

In Figur 7 ist eine Trägerplatte (3) gezeigt, an der zwei Abdeckkappen (3A) für jeweils eine Kamera (1) angeordnet sind. Die optischen Führungselemente (4A,4B) sind zwischen den beiden Lichteintrittsfenstern (3B) der Abdeckkappen (3A) angeordnet.

Die optischen Führungselemente können grundsätzlich beliebig auf der Trägerplatte um das Lichteintrittsfenster herum angeordnet sein, und zwar sowohl um das Lichteintrittsfenster herum als auch nur auf einer Seite davon.

Die Kamera umfasst mindestens ein Objektiv und einen lichtempfindlichen Halbleiterchip.

In einer nicht dargestellten Ausführungsform weist die Trägerplatte randseitig einen gegenüber der Grundfläche - in der die optischen Führungselemente bündig angeordnet sind - hervorstehenden, umlaufenden Kragen auf, der als Begrenzungsrahmen für eine aushärtende Vergussmasse dient, welche das Koppelmedium ausbildet.

### Bezugszeichenliste:

1) Kamera
   1A) Kameraobjektiv
   1B) Kugelsegment auf der Kamera
2) Scheibe
3) Trägerplatte
   3A) Abdeckkappe
   3B) Lichteintrittsfenster in der Trägerplatte
   3C) Aussparung in der trichterförmigen Abdeckkappe zur Aufnahme des Kameraobjektivs 4A, 4B) Optische Führungselemente in der Trägerplatte

## Patentansprüche

1. Kameraanordnung für Kraftfahrzeuge mit einer Kamera (1), die im Fahrzeuginnenraum hinter einer Scheibe (2) angeordnet ist, wobei eine Trägerplatte (3) vorgesehen ist, die an der Innenseite der Scheibe (2) befestigt ist und als Halterung für die Kamera (1) dient,
**dadurch gekennzeichnet, dass**
- mit der Trägerplatte (3) mindestens ein materiegebundenes optisches Führungselement (4A,4B) für eine von der Kamera (1) unabhängige Sensoreinrichtung verbunden ist,
- die Trägerplatte (3) mit dem mindestens einen optischen Führungselement (4A,4B) direkt oder indirekt über ein optisches Koppelmedium an der Scheibeninnenseite anliegt,
- das optische Führungselement (4A,4B) bündig mit der Trägerplatte (3) abschließt,

2. Kameraanordnung nach Anspruch 1,
**dadurch gekennzeichnet, dass**
das mindestens eine optische Führungselement (4A,4B) einstückig mit der Trägerplatte (3) für die Kamera (1) ausgebildet ist.

3. Kameraanordnung nach Anspruch 1,
**dadurch gekennzeichnet, dass**
das mindestens eine optische Führungselement (4A,4B) über ein Verbindungselement, insbesondere eine Rastverbindung, mit der Trägerplatte (3) für die Kamera (1) verbunden ist.

4. Kameraanordnung nach Anspruch 3,
**dadurch gekennzeichnet, dass**
das mindestens eine optische Führungselement (4A,4B) Teil einer zweiten Trägerplatte ist, die über ein Verbindungselement, insbesondere eine Rastverbindung, mit der Trägerplatte (3) für die Kamera (1) verbunden ist.

5. Kameraanordnung nach einem der vorstehenden Ansprüche,
**dadurch gekennzeichnet, dass**
an der Scheibe (2) ein Befestigungselement, insbesondere ein Befestigungsring angeklebt ist, wobei die Trägerplatte (3) für die Kamera (1) über eine an dem Befestigungselement angreifende Feder gegen die Scheibe (2) gedrückt wird.

6. Kameraanordnung nach einem der vorstehenden Ansprüche 1 bis 4,
**dadurch gekennzeichnet, dass**
die Trägerplatte (3) an die Scheibe (1) geklebt ist.

7. Kameraanordnung nach einem der vorstehenden Ansprüche,
**dadurch gekennzeichnet, dass**
- an der Trägerplatte (3) eine Abdeckkappe (3A) angeformt ist, welche den Raum zwischen Scheibe (2) und Kameraobjektiv (1A) licht- und staubdicht umschließt, wobei die Kamera (1) an dem der Scheibe (2) abgewandten Ende der Abdeckkappe (3A) angeordnet ist,
- die Trägerplatte (3) ein Lichteintrittsfenster (3B) aufweist,
- die Trägerplatte (3) so an der Scheibe (2) anliegt, dass die Abdeckkappe (3A) im Bereich des Lichteintrittsfensters (3B) von der Scheibe (2) verschlossen wird.

8. Kameraanordnung nach Anspruch 7,
**dadurch gekennzeichnet, dass**
die Abdeckkappe (3A) in Form eines Trichters ausgebildet ist, der in Richtung von der Scheibe weg verjüngt ausgebildet ist.

9. Kameraanordnung nach Anspruch 7 oder 8,
**dadurch gekennzeichnet, dass**
die Abdeckkappe (3A) an ihrem der Scheibe abgewandten Ende eine Aussparung (3C) zur licht- und staubdichten Aufnahme des Kameraobjektivs (1A) aufweist.

10. Kameraanordnung nach einem der vorstehenden Ansprüche,
**dadurch gekennzeichnet, dass**
das mindestens eine optische Führungselement (4A,4B) Teil eines Regensensors zur Niederschlagserfassung auf der Scheibe ist.

11. Kameraanordnung nach Anspruch 10,
**dadurch gekennzeichnet, dass**
wenigstens ein optisches Führungselemente-Paar (4A,4B) vorgesehen ist, wobei das eine optische Führungselement (4A) der Einkopplung von Meßstrahlung aus einem Sender in die Scheibe (2) dient, während das andere optische Führungselement (4B) der Auskopplung der an der Scheibenaußenseite reflektierten Meßstrahlung in Richtung auf einen Empfänger dient.

12. Kameraanordnung nach einem der vorstehenden Ansprüche,
**dadurch gekennzeichnet, dass**
das mindestens eine optische Führungselement (4A,4B) Teil eines Vorfeld- und/oder Umgebungslichtsensors zur automatischen Fahrlichtschaltung ist, wobei das mindestens eine optische Führungselement das Vorfeld- und/oder Umgebungslicht auf einen zugeordneten Empfänger richtet.

13. Kameraanordnung nach einem der vorstehenden Ansprüche,
**dadurch gekennzeichnet, dass**
die Trägerplatte (3) für die Kamera (1) bis auf das mindestens eine optische Führungselement (4A,4B) aus einem nicht transparenten Material besteht.

14. Kameraanordnung nach Anspruch 13,
**dadurch gekennzeichnet, dass**
die Trägerplatte (3) aus einem für sichtbares Licht nicht transparenten Material besteht.

15. Kameraanordnung nach Anspruch 13 oder 14,
**dadurch gekennzeichnet, dass**
die Trägerplatte (3) aus einem für infrarotes Licht nicht transparenten Material besteht.
